# EUROPEAN PATENT APPLICATION

(11) **EP 3 407 246 A1**
(43) Date of publication of application: **28.11.2018**
(21) Application number: 17779991.3
(22) Date of filing: 27.03.2017
(51) Int. Cl.: G06K 9/00, G06F 21/32

(54) **METHOD AND ELECTRONIC DEVICE FOR PROMPTING FOR FINGERPRINT OPERATION**

(71) Applicant: Shenzhen Goodix Technology Co., Ltd., Shenzhen, Guangdong, 518045 (CN)
(72) Inventor: ZUO, Yong, Shenzhen Guangdong 518045 (CN); WANG, Bing, Shenzhen Guangdong 518045 (CN)
(74) Representative: Broderick, Terence
(86) International application number: PCT/CN2017/078326
(87) International publication number: WO 2018/176200

(57) **Abstract**

Provide is a method for prompting a fingerprint operation, comprising steps of: determining whether a fingerprint input position needs to be prompted; if the fingerprint input position needs to be prompted, displaying a first prompt graphic in an effective fingerprint detection area, wherein the effective fingerprint detection area is located in at least a part of a display area of a display; enabling a fingerprint collection function, and collecting fingerprint information in the effective fingerprint detection area; and processing the collected fingerprint information, and generating a fingerprint recognition processing result according to the fingerprint information.. The method displays a prompt graphic in a corresponding display area of a fingerprint apparatus, so as to prompt a fingerprint recognition position without affecting the integrity of a display, thereby implementing functions of a fingerprint recognition and processing.

## Description

### TECHNICAL FIELD

The present disclosure relates to the field of fingerprint technologies, and in particular, to a method for prompting a fingerprint operation and an electronic device.

### BACKGROUND

A fingerprint is unique, convenient and invariant over the life of an individual, and therefore has almost become a synonym for biometric recognition. Fingerprint recognition apparatuses are widely applied to various electronic devices such as mobile phones, tablet computers and the like. Currently, manufacturers have intended to mount a fingerprint recognition apparatus below a touch display screen, to implement under-display fingerprint recognition.

For conventional electronic devices with fingerprint recognition, hole forming, grooving, or silk screen treatment is often performed at the position of a fingerprint recognition apparatus, to prompt a fingerprint input position for a user. However, if an under-display fingerprint solution is adopted, a user cannot know the position of the fingerprint recognition apparatus. Consequently, it is inconvenient for the user to perform a fingerprint input operation.

### SUMMARY

According to some embodiments of the present disclosure, there are provided a method for prompting a fingerprint operation and an electronic device therefor, so as to prompt a fingerprint recognition position without affecting the integrity of a display, and implement functions of a fingerprint recognition and processing.

According to an embodiment of the present disclosure, there is provided a method for prompting a fingerprint operation, including steps of: determining whether a fingerprint input position needs to be prompted; if the fingerprint input position needs to be prompted, displaying a first prompt graphic in an effective fingerprint detection area, wherein the effective fingerprint detection area is located in at least a part of a display area of a display; enabling a fingerprint collection function, and collecting fingerprint information in the effective fingerprint detection area; and processing the collected fingerprint information, and generating a fingerprint recognition processing result according to the fingerprint information.

According to another embodiment of the present disclosure, there is provided an electronic device, including a display, a fingerprint apparatus, an in-display fingerprint recognition middle ware and a fingerprint processing module; an effective fingerprint detection area of the fingerprint apparatus is located in at least a part of a display area of the display; the in-display fingerprint recognition middle ware is configured in an operating system of the electronic device; the in-display fingerprint recognition middle ware is configured to: when determining that a fingerprint input position needs to be prompted, control the display to display a first prompt graphic in the effective fingerprint detection area, and control the fingerprint apparatus to enable a fingerprint collection function; the fingerprint apparatus is configured to collect fingerprint information in the effective fingerprint detection area after the fingerprint collection function is enabled; and the fingerprint processing module is configured to generate a fingerprint recognition processing result according to the fingerprint information.

Compared with the existing technologies, the embodiments display a prompt graphic in a corresponding display area of a fingerprint apparatus, so as to prompt a fingerprint recognition position without affecting the integrity of a display, and implement functions of a fingerprint recognition and processing.

### BRIEF DESCRIPTION OF THE DRAWINGS

One or more embodiments are exemplarily described by using figures that are corresponding thereto in the accompanying drawings; the exemplary descriptions do not constitute a limitation to the embodiments. Elements with same reference numerals in the accompanying drawings are similar elements. Unless otherwise particularly stated, the figures in the accompanying drawings do not constitute a scale limitation.
Fig. 1 is a specific flowchart of a method for prompting a fingerprint operation according to a first embodiment of the present disclosure;
Fig. 2 is a schematic diagram of an electronic device for displaying a first prompt graphic according to the first embodiment of the present disclosure;
Fig. 3 is a schematic diagram of an electronic device after a graphic is revoked according to the first embodiment of the present disclosure;
Fig. 4 is a specific flowchart of a method for prompting a fingerprint operation according to a second embodiment of the present disclosure;
Fig. 5 is a specific flowchart of a method for prompting a fingerprint operation according to a third embodiment of the present disclosure;
Fig. 6 is a specific flowchart of a method for prompting a fingerprint operation according to a fourth embodiment of the present disclosure;
Fig. 7 is a schematic diagram of an electronic device for displaying a second prompt graphic according to the fourth embodiment of the present disclosure;
Fig. 8 is a specific flowchart of a method for prompting a fingerprint operation according to a fifth embodiment of the present disclosure;
Fig. 9 is a schematic diagram of an electronic device for displaying a third prompt graphic according to the fifth embodiment of the present disclosure;
Fig. 10 is a schematic diagram of an electronic device for displaying a fourth prompt graphic according to the fifth embodiment of the present disclosure;
Fig. 11 is a specific flowchart of a method for prompting a fingerprint operation according to a sixth embodiment of the present disclosure;
Fig. 12 is a schematic block diagram of an electronic device according to a seventh embodiment of the present disclosure; and
Fig. 13 is a schematic block diagram of an electronic device according to an eighth embodiment of the present disclosure.

### DETAILED DESCRIPTION

To make the objectives, technical solutions, and advantages of this disclosure clearer and more comprehensible, the following further describes the disclosure in detail with reference to the accompanying drawings and embodiments. It should be understood that the specific embodiments described herein are merely used to explain the disclosure but are not intended to limit the disclosure.

A first embodiment of the present disclosure relates to a method for prompting a fingerprint operation, and the method is applied to an electronic device including a display and a fingerprint apparatus. An effective fingerprint detection area of the fingerprint apparatus is located in at least a part of a display area of the display. That is, the at least a part of the display area of the display serves as the effective fingerprint detection area, to enable the electronic device to implement a fingerprint recognition function in the display area. The electronic device may for example be a mobile intelligent terminal device such as a mobile phone, a tablet computer or the like, or may be an intelligent electronic apparatus of other types. The fingerprint apparatus may for example be an optical fingerprint sensor, a capacitive fingerprint sensor or an ultrasonic fingerprint sensor, or a fingerprint module including a fingerprint sensor.

More specifically, the display of the electronic device may be a liquid crystal display (LCD), an organic light-emitting diode (OLED) display, a micro light-emitting diode (Micro-LED) display or a flat-panel display of other types. When the electronic device is applied to the mobile intelligent terminal device, the display may be a touch display having both a touch function and a display function. For example, the display includes a touch screen (i.e., a touch sensor) and a display screen in a stacked arrangement. The fingerprint apparatus may be integrally disposed with the display in an under-display structure or an in-display structure. For example, the fingerprint apparatus may serve as an independent functional module and be directly disposed below the display area of the display; alternatively, the fingerprint apparatus may integrate and reuse some functions of the display (for example, using self-luminous display pixels of the display as a light source, etc.).

Further, as an optional implementation, the method for prompting a fingerprint operation and the electronic device for prompting a fingerprint operation of the embodiment of this disclosure may employ structures and functions of software and hardware modules of the intelligent terminal described in a PCT patent application No. PCT/CN2016/112073 filed by the applicant on December 26, 2016. The PCT patent application is incorporated herein by reference in its entirety.

In this embodiment, the electronic device may implement interactive control of a display driver (DP driver) of an operating system, a fingerprint processing module, and the fingerprint apparatus by configuring an in-display fingerprint recognition middle ware in the operating system, and the in-display fingerprint recognition middle ware may further control the DP driver to drive the display to perform displaying. In addition, the electronic device further includes a touch screen. The touch screen is mounted on the display and covers at least the effective fingerprint detection area.

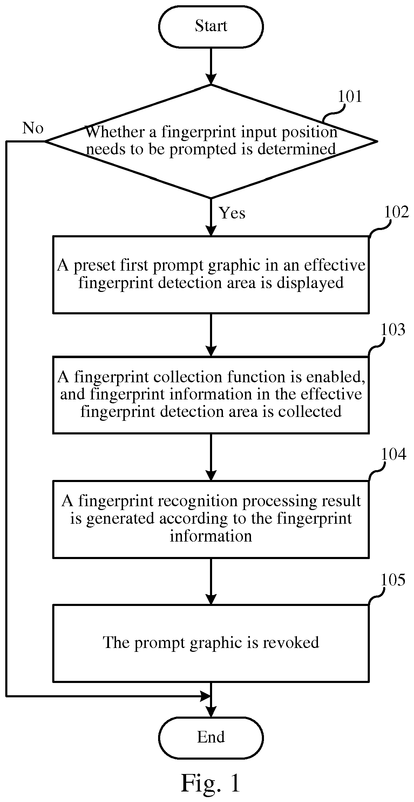

Fig. 1 is shown to a specific procedure of the method for prompting a fingerprint operation in this embodiment.

Step 101: whether a fingerprint input position needs to be prompted is determined. If yes, the process turns to step 102. If not, the process directly ends.

Specifically, the determining of whether the fingerprint input position needs to be prompted by the in-display fingerprint recognition middle ware, includes: a detection of whether there is a fingerprint verification request currently. The fingerprint verification request may be a fingerprint verification request initiated by a user by means of a finger touch or press, or may be a fingerprint verification request initiated by an application to an electronic system.

In an embodiment, when a user's finger touch or press on the display is detected currently (for example, the user intends to unlock the electronic device), and the finger touch or press satisfies a preset condition (for example, a pressing duration reaches a preset duration, etc., to avoid a misoperation), the in-display fingerprint recognition middle ware may consider that there is a fingerprint verification request initiated by the user currently, and the fingerprint input position needs to be prompted. Alternatively, when the electronic device is in a bright screen operational state (that is, the user is using the electronic device) and an application (App) initiates a fingerprint verification request to the operating system (for example, a fingerprint verification needs to be performed during the use of Alipay to make a payment), the in-display fingerprint recognition middle ware may obtain the fingerprint verification request from the operating system, and consider that the fingerprint input position needs to be prompted currently.

That is, when the in-display fingerprint recognition middle ware detects a fingerprint verification request, no matter whether the fingerprint verification request is actively initiated by the user's finger touch or initiated by an App, it indicates that the user needs to perform a fingerprint input operation to verify whether the user is authorized to unlock the electronic device or enable a corresponding function of the App. In this case, it may determine that the fingerprint input position of the display needs to be prompted, and the process turns to step 102. Otherwise, it indicates that the fingerprint input position does not need to be prompted.

Step 102: a preset first prompt graphic in an effective fingerprint detection area is displayed.

Specifically, in this embodiment, the effective fingerprint detection area of the fingerprint apparatus of the electronic device is located in at least a partial area of the display. The user needs to perform a fingerprint input operation in the effective fingerprint detection area before the fingerprint apparatus performs an effective fingerprint recognition. However, since the user is not aware of the effective fingerprint detection area, when it is determined that the fingerprint input position of the display needs to be prompted, the in-display fingerprint recognition middle ware may enable, via the DP driver, the display to display the preset first prompt graphic in the effective fingerprint detection area. The first indicating graphic may be a fingerprint input guiding icon, to guide the user to perform a fingerprint input operation such as a finger press or swipe in the effective fingerprint detection area of the display.

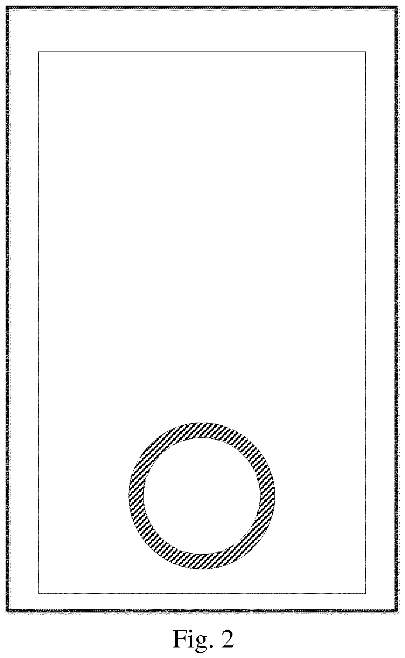

In this embodiment, the preset first prompt graphic may be in various forms such as a dynamic form or a static form. For example, referring to Fig. 2, the preset first prompt graphic is a pure white circle, and may have a bright and dark variation periodically at a specified time interval, so as to form a breathing effect. In practice, the user may set the first prompt graphic based on his/her preference, and this embodiment is not limited in this regard.

Step 103: a fingerprint collection function is enabled, and fingerprint information in the effective fingerprint detection area is collected.

Specifically, when the fingerprint collection function does not need to be enabled, the fingerprint apparatus is generally in a sleep state, to reduce power consumption. When detecting a fingerprint verification request requiring the user to perform a fingerprint verification, the in-display fingerprint recognition middle ware may enable the fingerprint collection function of the fingerprint apparatus via the fingerprint processing module (or a fingerprint driver module). In this case, the user may perform, according to the preset first prompt graphic displayed in the display, a fingerprint input operation in the effective fingerprint detection area in a manner of such as a finger press or swipe or the like. The fingerprint apparatus further collects fingerprint information of the user's finger in the effective fingerprint detection area.

Step 104: a fingerprint recognition processing result is generated according to the fingerprint information.

Specifically, after collecting the fingerprint information of the user, the fingerprint apparatus reports the fingerprint information to the operating system. In addition, the operating system may process the fingerprint information via the fingerprint processing module, including fingerprint information processing and fingerprint information matching verification, and generate a corresponding processing result. The processing result may indicate that the fingerprint matching succeeds, or the fingerprint matching fails.

Step 105: the prompt graphic is revoked.

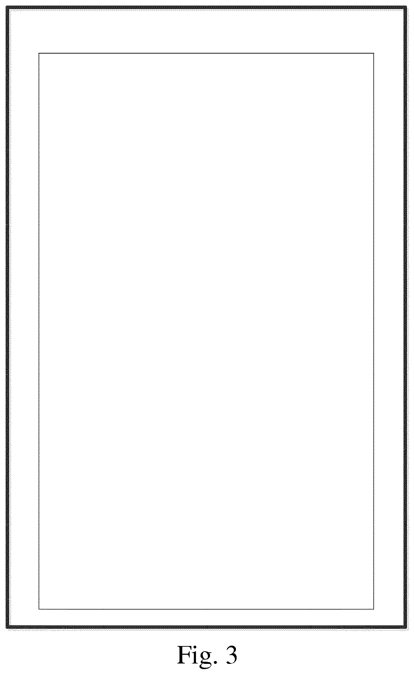

Specifically, after the fingerprint processing module generates the processing result, the in-display fingerprint recognition middle ware may drive, via the DP driver, the display to revoke the prompt graphic displayed in the effective fingerprint detection area, that is, revoke the first prompt graphic. After the graphic is revoked, the electronic device may directly restore to a normal picture originally displayed, or enter a display picture displayed after the fingerprint recognition succeeds, referring to Fig. 3.

For example, in an example, the in-display fingerprint recognition middle ware may drive the display to revoke the first prompt graphic via the DP driver when the processing result of the fingerprint processing module is that the fingerprint matching succeeds. In an alternative example, when the processing result of the fingerprint processing module is that the fingerprint matching fails, the in-display fingerprint recognition middle ware may, via the DP driver, drive the display to display related information indicating that the fingerprint recognition fails and maintain the first prompt graphic to prompt the user to perform a fingerprint input operation in the effective fingerprint detection area again. The in-display fingerprint recognition middle ware drives the display to revoke the first prompt graphic via the DP driver, until the fingerprint matching succeeds or the times of the fingerprint matching failure reaches a preset value.

Compared with the existing technologies, in this embodiment, the prompt graphic is displayed in the display area corresponding to the fingerprint apparatus, so as to prompt the fingerprint recognition position without affecting the integrity of the display, and implement functions of the fingerprint recognition and processing.

A second embodiment of this disclosure relates to a method for prompting a fingerprint operation. This embodiment is based on the first embodiment and improves the step 101 in which whether a fingerprint input position needs to be prompted is determined.

An operational state of the electronic device may include a state of the display of the electronic device. The state of the display may specifically include a screen-off state, a screen-locked state and a screen-on state. Specifically, the screen-off state refers to that the display of the electronic device does not light up and is in an off state currently. For example, the screen-off state may be a standby state. In this case, some functional modules inside the electronic device may be in a sleep mode. The screen-locked state refers to that the display of the electronic device lights up but is in a locked state currently. The user needs to unlock the display before performing a touch input operation. The screen-on state refers to that the display of the electronic device of the intelligent terminal lights up and the electronic device is unlocked to enter a normal operational state currently, and the user may directly perform an input operation via the display. It should be understood that, when the electronic device is in the screen-on state, some Apps may be running and one of the Apps may be controlling the display to display corresponding application content.

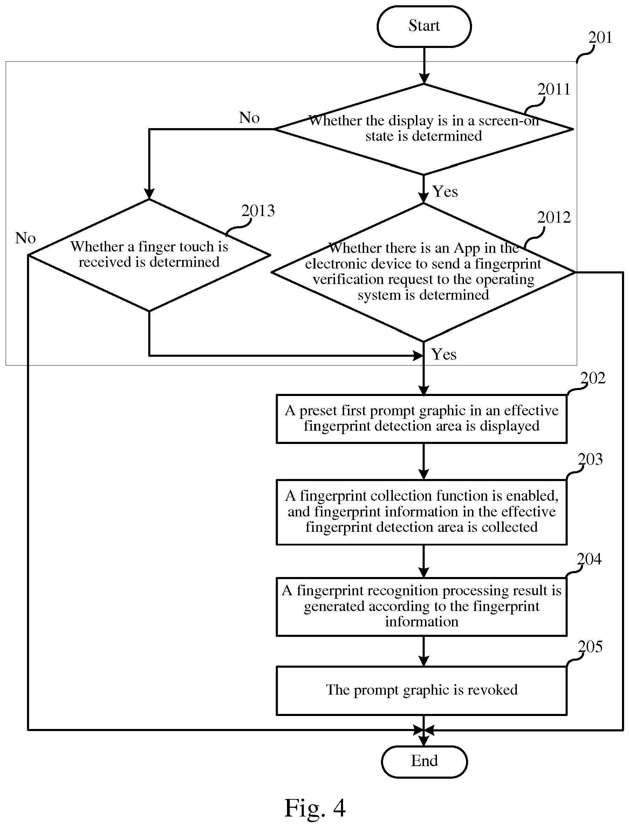

Fig. 4 is shown to a specific procedure of the method for prompting a fingerprint operation in this embodiment.

Step 202 to step 205 are substantially the same as step 102 to step 105, and are not repeatedly described herein. A difference is that, in this embodiment, step 201 of determining whether the fingerprint input position needs to be prompted specifically includes the following substeps:
Substep 2011: whether the display is in a screen-on state is determined. If yes, the process turns to substep 2012. If not, the process turns to substep 2013.

Specifically, the determining that whether the display is in the screen-on state is to determine a current operational state of the electronic device, so as to determine whether the user is using the electronic device.

Substep 2012: whether there is an App in the electronic device to send a fingerprint verification request to the operating system is determined. If yes, the process turns to step 202. If not, the process directly ends.

Specifically, when it is determined that the electronic device is in the screen-on state, i.e., the user is using the electronic device, it needs to further determine whether there is an App in the electronic device to send a fingerprint verification request to the operating system. When it is determined that there is a fingerprint verification request, it indicates that the fingerprint input position needs to be prompted, and the process turns to step 202. The in-display fingerprint recognition middle ware controls the display to display the preset first prompt graphic.

Substep 2013: whether a finger touch is received is determined. If yes, the process turns to step 202. If not, the process directly ends.

Specifically, when it is determined that the electronic device is not in the screen-on state, i.e., the electronic device is in the screen-off state or in the screen-locked state, the in-display fingerprint recognition middle ware further detects, via a touch detection module (for example, a touch screen), whether a user's finger touch is received, that is, determines whether there is a user's finger touch on the display. When it is determined that the finger touch is received, it indicates that the user is desired to activate or unlock the electronic device to perform an operation or enable some application functions by performing a fingerprint input operation. In this case, the fingerprint input position needs to be prompted. The process turns to step 202. The in-display fingerprint recognition middle ware controls the display to display the preset first prompt graphic.

It should be noted that, in this embodiment, in substep 2011, it is firstly determined whether the electronic device is in the screen-on state. In an alternative example, in substep 2011, it may alternatively be determined whether the electronic device is in the screen-off or screen-locked state. If yes, the process turns to 2013. If not, the process enters substep 2012, and this embodiment is not limited in this regard.

Compared with the first embodiment, this embodiment is based on the first embodiment and further supplements and improves a specific example of determining whether the fingerprint input position needs to be prompted.

A third embodiment of this disclosure relates to a method for prompting a fingerprint operation. This embodiment is based on the first embodiment and makes an improvement mainly in that, whether there is a finger touch in the effective fingerprint detection area is detected before the fingerprint collection function is enabled.

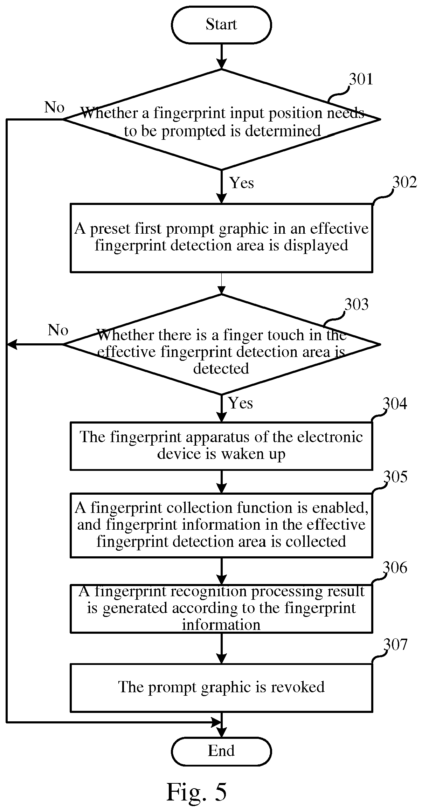

Fig. 5 is shown to a specific procedure of the method for prompting a fingerprint operation in this embodiment.

Step 301 and step 302 are substantially the same as step 101 and step 102, step 305 to step 307 are substantially the same as step 103 to step 105, and are not repeatedly described herein. This embodiment is based on the first embodiment and is added with step 303 and step 304 specifically as follows:
Step 303: whether there is a finger touch in the effective fingerprint detection area is detected. If yes, the process turns to step 304. If not, the process directly ends.

Specifically, the user may be aware of the effective fingerprint detection area in the display according to the preset first prompt graphic displayed on the display. The in-display fingerprint recognition middle ware detects whether the user' finger touches the effective fingerprint detection area of the display within a preset time via a touch screen. If there is a finger touch in the effective fingerprint detection area, the process turns to step 304. If there is no finger touch in the effective fingerprint detection area within the preset time, the in-display fingerprint recognition middle ware may control the electronic device to restore an original operational state. Alternatively, the in-display fingerprint recognition middle ware may drive the display to revoke the first prompt graphic via the DP driver before the electronic device restores the original operational state.

Step 304: the fingerprint apparatus of the electronic device is waken up.

Specifically, the fingerprint apparatus of the electronic device normally operates in a sleep mode, and is waken up when there is a need to perform a fingerprint verification to enable the fingerprint collection function. When detecting that, via the touch screen, there is a finger touch in the effective fingerprint detection area, the in-display fingerprint recognition middle ware controls the fingerprint apparatus of the electronic device to wake up, so as to collect the user's fingerprint.

Compared with the first embodiment, in this embodiment, the fingerprint apparatus of the electronic device is waken up when a finger touch is detected in an effective fingerprint detection area, and consequently power consumption is reduced. It should be noted that, alternatively, this embodiment may serves as an improvement based on the second embodiment, and same technical effects may be achieved accordingly.

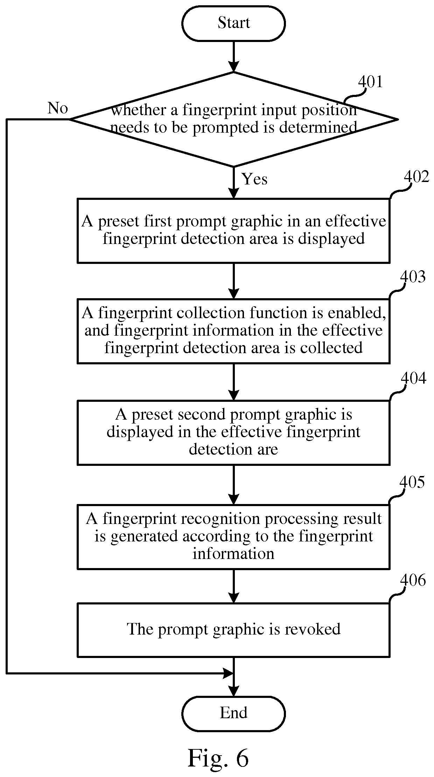

A fourth embodiment of this disclosure relates to a method for prompting a fingerprint operation. This embodiment is based on the first embodiment and makes an improvement mainly in that, referring to Fig. 6, prompts are displayed during a fingerprint collection and recognition in this embodiment.

Fig. 6 is shown to a specific procedure of the method for prompting a fingerprint operation in this embodiment.

Step 401 to step 403 are substantially the same as step 101 to step 103, step 405 and step 406 are substantially the same as step 104 and step 105, and are not repeatedly described herein. A difference is that, this embodiment further includes a step 404 specifically as follows:
Step 404, a preset second prompt graphic is displayed in the effective fingerprint detection area.

Specifically, the user knows the effective fingerprint detection area according to the preset first prompt graphic displayed on the display, and performs a fingerprint input operation in the effective fingerprint detection area. After the user performs the fingerprint input operation and the fingerprint apparatus collects fingerprint information, during the fingerprint processing unit processes the fingerprint information reported by the fingerprint apparatus, the in-display fingerprint recognition middle ware may drive the display to display the preset second prompt graphic in the effective fingerprint detection area via the DP driver. That is, the second prompt graphic replaces the first prompt graphic for indicating that the fingerprint information is collected and the fingerprint information is being processed, thereby improving user experiences.

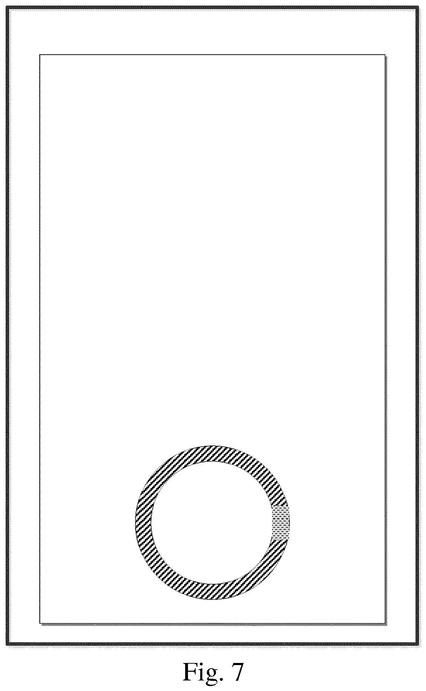

In this embodiment, the preset second prompt graphic may be in various forms such as a dynamic form or a static form. For example, referring to Fig. 7, the prompt graphic may be a circle with an opening. The color of an opening portion is different from that of the prompt graphic. The opening portion may rotate along the prompt graphic in a clockwise direction periodically at a specified time interval, and this embodiment is not limited in this regard.

In this embodiment, as described above, when the user's finger touches the effective fingerprint detection area, the in-display fingerprint recognition middle ware may drive the display to display the preset second prompt graphic in the effective fingerprint detection area to replace the original displayed first prompt graphic. This is not limited thereto. In an alternative example, the preset second prompt graphic displayed on the display may be displayed overlapping the preset first prompt graphic. In this case, the two prompt graphics need to be displayed cooperatively. For example, a new graphic layer is added based on the first prompt graphic, and the second prompt graphic is displayed on the new graphic layer. The position of the second prompt graphic completely overlaps the first prompt graphic, so as to form a desired graphic prompt effect.

It should be noted that, Fig. 6 is shown to steps exemplarily, and an actual sequence of performing step 403 and step 404 is not limited. In fact, step 404 may be performed during an operational process of step 403. For example, when the user's finger touches the effective fingerprint detection area and the fingerprint apparatus collects a fingerprint, the in-display fingerprint recognition middle ware may drive the display to display the second prompt graphic to replace the first prompt graphic or to display the second prompt graphic overlapping the first prompt graphic. After the fingerprint processing module generates a processing result according to the fingerprint information, the in-display fingerprint recognition middle ware enables the display to revoke the second prompt graphic.

Compared with the first embodiment, in this embodiment, prompts are displayed during the fingerprint collection and recognition, to inform the user that the fingerprint collection and recognition are being performed. It should be noted that, this embodiment may alternatively serve as an improvement based on the second embodiment or the third embodiment, and same technical effects may be achieved.

A fifth embodiment of this disclosure relates to a method for prompting a fingerprint operation. This embodiment is based on the fourth embodiment and makes an improvement mainly in that, in this embodiment, a prompt icon is used to indicate whether fingerprint matching succeeds.

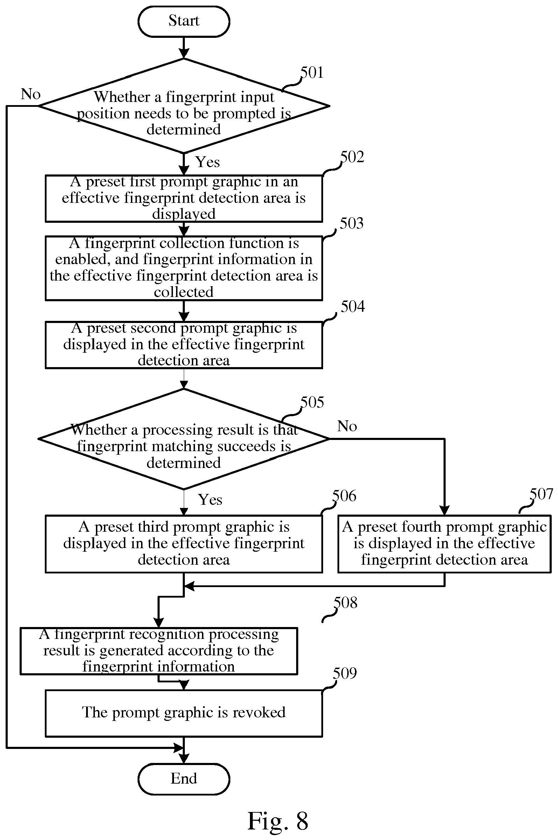

Fig. 8 is shown to a specific procedure of the method for prompting a fingerprint operation in this embodiment.

Step 501 to step 504 are substantially the same as step 401 to step 404, step 508 and step 509 are substantially the same as step 405 and step 406, and are not repeatedly described herein. A difference is that, this embodiment further includes step 505 to step 507 based on the fourth embodiment, which are specifically as follows:
Step 505: whether a processing result is that fingerprint matching succeeds is determined. If yes, the process turns to step 506. If not, the process turns to step 507.

Specifically, when the user performs a fingerprint registration in the electronic device, a fingerprint template of one or more fingers is prestored in the electronic device. When a fingerprint needs to be verified, the fingerprint processing module compares a fingerprint sample collected by the fingerprint apparatus with the prestored fingerprint templates, so as to generate a processing result. When the prestored fingerprint template matches with the collected fingerprint sample, the processing result is that the fingerprint matching succeeds, and the process turns to step 506. Otherwise, the processing result is that the fingerprint matching fails, and the process turns to step 507.

Step 506: a preset third prompt graphic is displayed in the effective fingerprint detection area.

Specifically, when determining that the processing result is that fingerprint matching succeeds, the in-display fingerprint recognition middle ware drives the display to display the preset third prompt graphic in the effective fingerprint detection area via the DP driver. The third prompt graphic is different from the first prompt graphic and the second prompt graphic. The third prompt graphic is used to indicate that the fingerprint matching succeeds for the user, i.e., an identity verification succeeds, so that the user may continue to perform a subsequent operation. For example, when the electronic device is in a screen-off state, the display is unlocked for the user to use the electronic device. Alternatively, the third prompt graphic is used to indicate that the fingerprint verification of an App succeeds when the user uses the App.

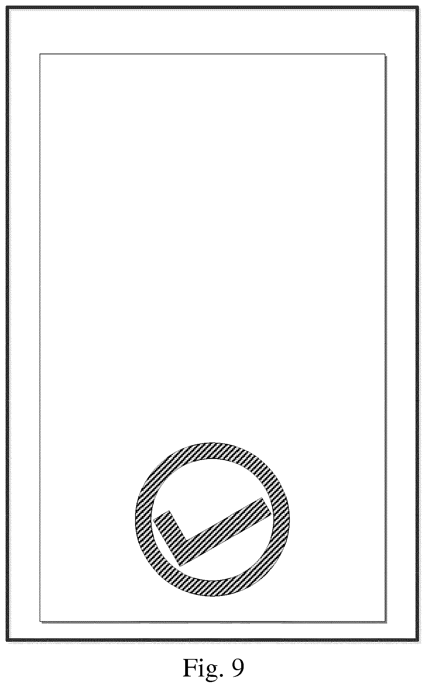

In this embodiment, the preset third prompt graphic may be in various forms such as a dynamic form or a static form. For example, referring to Fig. 9, the prompt graphic may be a static graphic for representing that the fingerprint matching succeeds, but this embodiment is not limited in this regard.

Step 507: a preset fourth prompt graphic is displayed in the effective fingerprint detection area.

Specifically, when determining that the processing result is that the fingerprint matching fails, the in-display fingerprint recognition middle ware drives the display to display the preset fourth prompt graphic in the effective fingerprint detection area via the DP driver. The fourth prompt graphic may be different from the first prompt graphic, the second prompt graphic and the third prompt graphic. The fourth prompt graphic is used to indicate that the fingerprint matching fails for the user, i.e., the identity verification fails. In this case, the user may directly use the same finger to perform a fingerprint input operation again, to implement a fingerprint verification; alternatively, the user may use another finger or removes foreign matter from the finger to perform a fingerprint input operation and verification again.

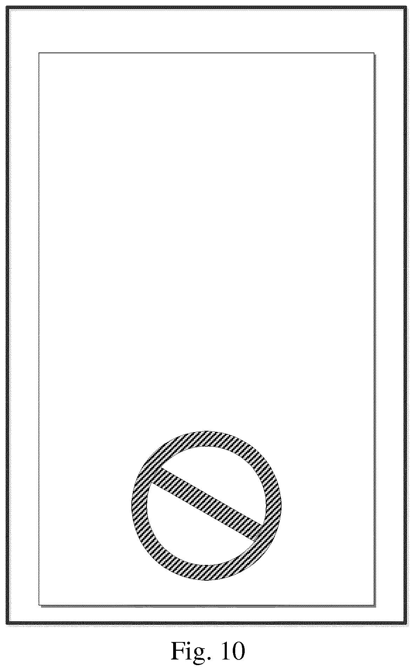

In this embodiment, the preset fourth prompt graphic may be in various forms such as a dynamic form or a static form. For example, referring to Fig. 10, the prompt graphic may be a static graphic representing that the fingerprint matching fails, but this embodiment is not limited in this regard.

Compared with the fifth embodiment, this embodiment provides a solution of indicating whether the fingerprint matching succeeds, so that the user knows a result of the fingerprint matching rapidly, thereby improving user experiences. It should be noted that, this embodiment may serve as an improvement based on any one of the first to the fourth embodiments, and same technical effects may be achieved.

A sixth embodiment of this disclosure relates to a method for prompting a fingerprint operation. This embodiment is based on the first embodiment and improves the step 102 of displaying a preset first prompt graphic in an effective fingerprint detection area.

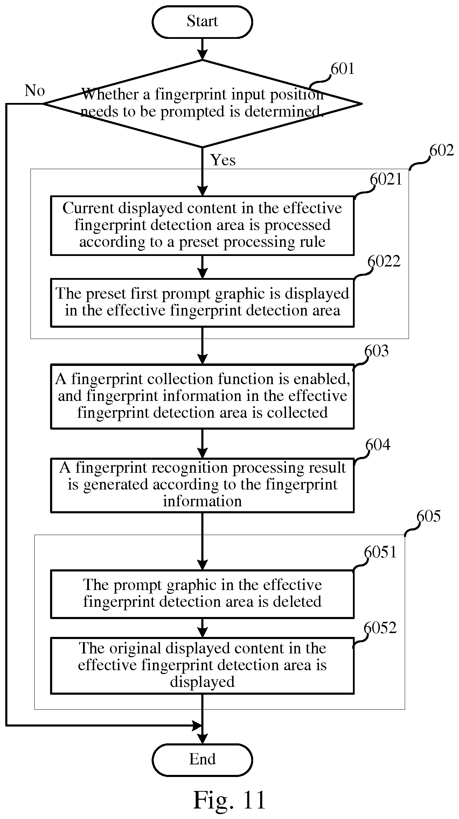

Fig. 11 is shown to a specific procedure of the method for prompting a fingerprint operation in this embodiment.

Step 601 is substantially the same as step 101, step 603 and step 604 are substantially the same as step 103 and step 104, and are not repeatedly described herein. Differences are as follows:
In this embodiment, step 602 of displaying a preset first prompt graphic in an effective fingerprint detection area specifically includes the following substeps:
Substep 6021: current displayed content in the effective fingerprint detection area is processed according to a preset processing rule.

Specifically, the preset processing rule includes hiding the current displayed content or fading the current displayed content. In this embodiment, the current displayed content in the effective fingerprint detection area is hidden or faded in step 6021, so that the first prompt graphic may be displayed in the effective fingerprint detection area, to prevent the current displayed content in the effective fingerprint detection area from interfering with the first prompt graphic. In a specific example, the hiding or fading processing may be implemented by adding a new graphic layer based on a current displayed picture of the display, the new graphic layer directly covers the current displayed picture to hide or fade the current displayed picture, and the first prompt graphic may be displayed in the new graphic layer.

Although the preset processing rule in this embodiment is to hide or fade the current displayed content, it should be notd that the preset processing rule is not limited thereto. The preset processing rule may alternatively be that, the in-display fingerprint recognition middle ware drives the display to scroll an original normal displayed picture in a preset direction via the DP driver, to remove original displayed content in the effective fingerprint detection area, so as to display the first prompt graphic in a same layer.

Substep 6022: the preset first prompt graphic is displayed in the effective fingerprint detection area.

Specifically, a manner in which the display of the electronic device displays the preset first prompt graphic may be that the in-display fingerprint recognition middle ware controls the DP driver to drive pixels in the effective fingerprint detection area of the display to display the first prompt graphic, and pixels in other areas maintain an original operational state (a screen-off state or a state of displaying the original content).

Further, in this embodiment, step 605 of revoking the prompt graphic may specifically include the following substeps:
Substep 6051: the prompt graphic in the effective fingerprint detection area is revoked.

Specifically, after the fingerprint processing module generates a processing result, the in-display fingerprint recognition middle ware drives the display to directly revoke the prompt graphic (the first prompt graphic in this embodiment) displayed in the effective fingerprint detection area via the DP driver.

Substep 6052: the original displayed content in the effective fingerprint detection area is restored.

Specifically, if the electronic device is in a screen-on state or screen-locked state, the in-display fingerprint recognition middle ware drives the display to restore the original displayed content via the DP driver. If the electronic device is in a screen-off state, the electronic device continues to maintain the screen-off state.

Compared with the first embodiment, this embodiment provides a specific method for displaying the first prompt graphic and a specific example for revoking the prompt graphic. It should be noted that, this embodiment may serve as a detailed example based on any one of the second to fifth embodiments, and same technical effects may be achieved.

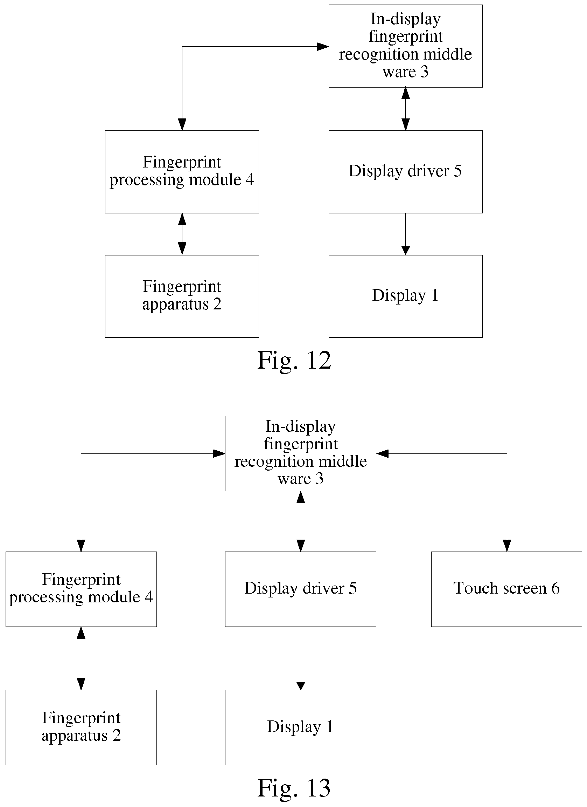

A seventh embodiment of this disclosure relates to an electronic device. For example, the electronic device may be a mobile intelligent terminal device such as a mobile phone, a tablet computer or the like, or may be an intelligent electronic apparatus of other types. Referring to Fig. 12, the electronic device includes a display 1, a fingerprint apparatus 2, an in-display fingerprint recognition middle ware 3 and a fingerprint processing module 4.

The display may be an OLED display, and an effective fingerprint detection area of the fingerprint apparatus 2 is located in at least a part of a display area of the display 1, so that the at least a part of the display area of the display 1 may serve as the effective fingerprint detection area. Specifically, the fingerprint apparatus 2 may be mounted below or integrated inside the display 1, and the in-display fingerprint recognition middle ware 3 may be configured in an operating system of the electronic device.

The in-display fingerprint recognition middle ware 3 is configured to: when determining that a fingerprint input position needs to be prompted, control the display 1 to display a preset first prompt graphic in the effective fingerprint detection area 11, and control the fingerprint apparatus 2 to enable a fingerprint collection function.

The fingerprint apparatus 2 is configured to collect fingerprint information in the effective fingerprint detection area.

The fingerprint processing module 4 is configured to generate a processing result according to the fingerprint information.

The in-display fingerprint recognition middle ware 3 is further configured to display, after the fingerprint information is collected and when the fingerprint information is being processed and a fingerprint recognition processing result is being generated, a preset second prompt graphic in the effective fingerprint detection area 11.

The in-display fingerprint recognition middle ware 3 is further configured to determine whether the processing result is that fingerprint matching succeeds before the prompt graphic is revoked. When the processing result is that the fingerprint matching succeeds, a preset third prompt graphic is displayed in the effective fingerprint detection area 11; or if the processing result is that the fingerprint matching fails, a fourth prompt graphic is displayed in the effective fingerprint detection area 11.

The in-display fingerprint recognition middle ware 3 is further configured to revoke the prompt graphic after the fingerprint processing module 4 generates the processing result.

Preferably, the electronic device further includes a DP driver 5. The DP driver 5 is configured in the operating system of the electronic device. The in-display fingerprint recognition middle ware 3 is further configured to perform interactive control with the DP driver 5, and drive the effective fingerprint detection area 11 to display a preset prompt graphic via the DP driver 5.

The prompt graphic is the first prompt graphic, the second prompt graphic, the third prompt graphic or the fourth prompt graphic.

Compared with the existing technologies, this embodiment can prompt a fingerprint recognition position without affecting the integrity of the display.

An eighth embodiment of this disclosure relates to an electronic device. This embodiment is based on the eighth embodiment and makes an improvement mainly in that, referring to Fig. 13, the electronic device further includes a touch screen 6.

The touch screen 6 is mounted on the display 1 and covers at least the effective fingerprint detection area 11.

The in-display fingerprint recognition middle ware 3 is further configured to detect whether there is a finger touch in the effective fingerprint detection area 11 via the touch screen 6. The in-display fingerprint recognition middle ware 3 is further configured to wake up the fingerprint apparatus 2 when there is a finger touch, to enable the fingerprint collection function of the fingerprint apparatus 2.

Because the third embodiment and this embodiment are corresponding to each other, this embodiment may be implemented corporately with the third embodiment. Related technical details described in the third embodiment are valid in this embodiment, and technical effects that are achieved in the third embodiment may also be achieved in this embodiment, and are not described herein to avoid repetition. Correspondingly, related technical details described in this embodiment may also be applied to the third embodiment.

Compared with the eighth embodiment, this embodiment enables the fingerprint apparatus to collect fingerprint information after it is determined that there is a finger touch, thereby avoiding the fingerprint collection caused by a mistouch and reducing power consumption.

It should be understood that, specific functions and operational processes of functional units of the electronic devices in Fig. 12 and Fig. 13, may refer to a corresponding description of the above method embodiments, and corresponding steps may be performed to implement a corresponding function, and are not repeatedly described herein.

A person of ordinary skill in the art may understand that the foregoing embodiments are specific embodiments of the present disclosure, but in practical applications, various changes in forms and details may be made to the embodiments without departing from the spirit and scope of the present disclosure.

## Claims

1. A method for prompting a fingerprint operation, **characterized by** comprising:
determining whether a fingerprint input position needs to be prompted;
displaying a first prompt graphic in an effective fingerprint detection area if the fingerprint input position needs to be prompted, wherein the effective fingerprint detection area is located in at least a part of a display area of a display;
enabling a fingerprint collection function, and collecting fingerprint information in the effective fingerprint detection area; and
processing the collected fingerprint information, and generating a fingerprint recognition processing result according to the fingerprint information.

2. The method for prompting a fingerprint operation according to claim 1, **characterized by** further comprising:
displaying a second prompt graphic in the effective fingerprint detection area during processing of the fingerprint information and generating of fingerprint recognition processing result.

3. The method for prompting a fingerprint operation according to claim 1 or 2, **characterized by** further comprising:
determining whether the fingerprint recognition processing result is that fingerprint matching succeeds; and
displaying a third prompt graphic in the effective fingerprint detection area if the fingerprint recognition processing result is that fingerprint matching succeeds; or
displaying a fourth prompt graphic in the effective fingerprint detection area if the fingerprint recognition processing result is that fingerprint matching fails.

4. The method for prompting a fingerprint operation according to any one of claims 1 to 3, **characterized in that**, the displaying a first prompt graphic in an effective fingerprint detection area comprises:
fading or hiding current displayed content in the effective fingerprint detection area; and
displaying the first prompt graphic in the effective fingerprint detection area.

5. The method for prompting a fingerprint operation according to any one of claims 1 to 3, **characterized in that**, the displaying a first prompt graphic in an effective fingerprint detection area comprises:
scrolling an entire current displayed picture to remove displayed content in the effective fingerprint detection area; and
displaying the first prompt graphic in the effective fingerprint detection area.

6. The method for prompting a fingerprint operation according to claim 4 or 5, **characterized by** further comprising:
revoking a prompt graphic currently displayed in the effective fingerprint detection area after the fingerprint recognition processing result is generated, and restoring an original displayed normal picture or entering a displayed picture displayed after a fingerprint recognition succeeds.

7. The method for prompting a fingerprint operation according to any one of claims 1 to 6, **characterized in that**, the determining whether a fingerprint input position needs to be prompted comprises:
detecting whether there is a fingerprint verification request currently; and
determining that the fingerprint input position needs to be prompted currently when the fingerprint verification request is detected, and waking up a fingerprint apparatus.

8. The method for prompting a fingerprint operation according to claim 7, **characterized in that**, the detecting whether there is a fingerprint verification request currently comprises:
detecting an operational state of the display; and
determining whether a finger touch is received when the display is in a screen-off state or a screen-locked state; and if the finger touch is received, determining that a user currently initiates the fingerprint verification request via the finger touch; or
determining whether an application sends the fingerprint verification request to an operating system when the display is in a screen-on state.

9. An electronic device, **characterized by** comprising a display, a fingerprint apparatus, an in-display fingerprint recognition middle ware and a fingerprint processing module, wherein
an effective fingerprint detection area of the fingerprint apparatus is located in at least a part of a display area of the display; the in-display fingerprint recognition middle ware is configured in an operating system of the electronic device;
the in-display fingerprint recognition middle ware is configured to:
control the display to display a first prompt graphic in the effective fingerprint detection area when determining that a fingerprint input position needs to be prompted, and
control the fingerprint apparatus to enable a fingerprint collection function;
the fingerprint apparatus is configured to collect fingerprint information in the effective fingerprint detection area after the fingerprint collection function is enabled; and
the fingerprint processing module is configured to generate a fingerprint recognition processing result according to the fingerprint information.

10. The electronic device according to claim 9, **characterized in that**, the in-display fingerprint recognition middle ware is further configured to control the display to display a second prompt graphic in the effective fingerprint detection area during processing of the fingerprint information and generating of the fingerprint recognition processing result.

11. The electronic device according to claim 9 or 10, **characterized in that**, the in-display fingerprint recognition middle ware is further configured to:
determine whether the fingerprint recognition processing result is that fingerprint matching succeeds; and
control the display to display a third prompt graphic in the effective fingerprint detection area when the fingerprint recognition processing result is that fingerprint matching succeeds; or
control the display to display a fourth prompt graphic in the effective fingerprint detection area when the fingerprint recognition processing result is that fingerprint matching fails.

12. The electronic device according to any one of claims 9 to 11, **characterized in that**, the electronic device further comprises a display driver, and the display driver is configured in the operating system of the electronic device; and
the in-display fingerprint recognition middle ware is configured to:
perform interactive control with the display driver, and
drive the display to display a corresponding prompt graphic in the effective fingerprint detection area via the display driver;
wherein the prompt graphic is the first prompt graphic, the second prompt graphic, the third prompt graphic or the fourth prompt graphic.

13. The electronic device according to any one of claims 9 to 12, **characterized in that**, the electronic device further comprises a touch screen, and the touch screen is mounted on the display and covers at least the effective fingerprint detection area; and
the in-display fingerprint recognition middle ware is further configured to:
detect, via the touch screen, whether there is a finger touch in the effective fingerprint detection area; and
wake up the fingerprint apparatus when there is a finger touch and the finger touch satisfies a preset condition, to enable the fingerprint collection function of the fingerprint apparatus.

14. The electronic device according to any one of claims 9 to 13, **characterized in that**, the fingerprint apparatus is an optical fingerprint sensor, and the optical fingerprint sensor uses at least some of pixel units of the display as a light source.

15. The electronic device according to claim 14, **characterized in that**, the display is an organic light-emitting diode display.
